# FASCICULE DE BREVET EUROPEEN

(11) **EP 2 455 731 B1**
(45) Date de publication et mention de la délivrance du brevet: **06.01.2021**
(21) Numéro de dépôt: 11354068.6
(22) Date de dépôt: 21.11.2011
(51) Int. Cl.: G01J 1/02, G01J 1/44

(54) **Circuit de détection avec module d'anti-éblouissement**
Detektionsschaltung mit Blendschutzmodul
Detection circuit with anti-blooming module

(30) Priorité: 22.11.2010 FR 1004535
(43) Date de publication de la demande: 23.05.2012
(73) Titulaire: LYNRED, 91120 Palaiseau (FR)
(72) Inventeur: Ricard, Nicolas, 38500 Coublevie (FR)
(74) Mandataire: Talbot, Alexandre

(56) Documents cités:
- EP-A1- 2 037 241
- EP-A1- 2 178 288
- DE-A1- 3 831 409
- DE-A1-102006 058 292

## Description

### Domaine technique de l'invention

L'invention est relative à un circuit de détection comportant une photodiode reliée à un module de lecture.

### État de la technique

Dans le domaine des dispositifs de détection, il y a communément un photodétecteur associé à un circuit de lecture. Le photodétecteur délivre un signal représentatif de la scène observée et ce signal est analysé par le circuit de lecture.

La polarisation du photodétecteur est obtenue au moyen du potentiel de substrat imposé sur une première borne du photodétecteur et au moyen d'un potentiel de référence imposé sur la seconde borne du photodétecteur par un module de lecture de type amplificateur transimpédance capacitif.

Cependant, il est courant d'observer des circuits de détection qui ne présentent pas un fonctionnement satisfaisant suite aux aléas du procédé de réalisation. Par ailleurs, lorsque les photodétecteurs sont intégrés en matrice, il est également courant d'observer une détérioration des caractéristiques des circuits de détection proches d'un circuit de détection non fonctionnel.

Le document DE102006058292 illustre un circuit de détection muni d'une photodiode connectée à un circuit de lecture de type CTIA par l'intermédiaire d'un transistor T2. Un dispositif de commande est configuré pour commander l'état de transistors SW1 et SW2. Le transistor SW2 possède une électrode de drain connectée à l'amplificateur et une électrode de source connectée à l'électrode de drain du transistor T2. L'électrode de source du transistor T2 est connectée à l'anode de la photodiode. L'électrode de grille du transistor T2 est reliée à la tension VSS. Un circuit de détection s'affranchissant aux problèmes d'éblouissement de la photodiode est illustré dans le document EP 2037241.

### Objet de l'invention

On constate qu'il existe un besoin de prévoir un circuit de lecture plus robuste vis-à-vis des aléas de fonctionnement. Pour cela, on cherche en particulier à réaliser un circuit selon les revendications annexées et plus particulièrement un circuit dans lequel la photodiode et le module de lecture sont connectés par l'intermédiaire d'un transistor agencé pour fonctionner en commutateur fermé lorsque le module de lecture polarise la photodiode dans une gamme prédéfinie et pour fonctionner en commutateur ouvert dans les autres cas.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

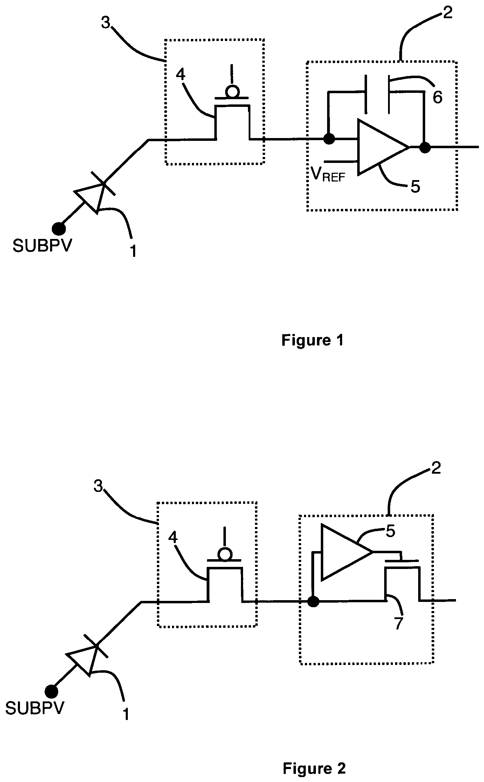

- les figures 1 et 2 représentent, de manière schématique, des modes de réalisation de circuits de détection munis d'un module d'anti-éblouissement.

### Description de modes de réalisation préférentiels de l'invention

Comme cela est illustré aux figures 1 et 2, le circuit de détection comporte un photodétecteur 1 qui est connecté à un module de lecture 2. Le photodétecteur 1 est une photodiode de type P/N ou de type N/P. Dans la photodiode, la zone de type N forme la cathode tandis que la zone de type P forme l'anode.

Selon les modes de réalisation, le module de lecture 2 est un amplificateur capacitif transimpédance (CTIA) comme cela est illustré à la figure 1 ou un module à injection direct contre-réactionné (BDI) comme cela est illustré à la figure 2. Le module de lecture 2 impose, à sa borne d'entrée, un potentiel de référence V_{REF} qui sert à polariser le photodétecteur 1.

Un circuit d'anti-éblouissement 3 est intégré entre le module de lecture 2 et le photodétecteur 1. Le circuit d'anti-éblouissement 3 comporte un transistor 4 qui relie le photodétecteur 1 au module de lecture 2. Le transistor 4 est traversé par le courant qui circule entre le photodétecteur 1 et le module de lecture 2. Le circuit d'anti-éblouissement 3 fixe le potentiel de la seconde borne du photodétecteur 1 au moyen du potentiel de référence V_{REF} présent à l'entrée du module de lecture 2.

Une première électrode du transistor 4 est reliée au module de lecture 2. Une seconde électrode du transistor 4 est reliée à la seconde borne du photodétecteur 1. Ainsi, le photodétecteur 1 et le module de lecture 2 sont connectés par l'intermédiaire du transistor 4.

Dans un mode de réalisation particulier, le module d'anti-éblouissement 3 est constitué par le transistor 4.

Le photodétecteur 1 est polarisé en inverse dans des conditions qui permettent la génération d'un courant représentatif de la scène observée. La photodiode est polarisée en inverse et agit comme un générateur de courant.

La première borne du photodétecteur 1 est reliée à un nœud de polarisation qui fixe le potentiel de photodétecteur SubPV. La polarisation du photodétecteur est obtenue au moyen du potentiel de photodétecteur SubPV imposé sur une première borne du photodétecteur et au moyen d'un potentiel imposé sur la seconde borne du photodétecteur à partir du potentiel de référence V_{REF} imposé par le module de lecture 2. Ces deux potentiels définissent la différence de potentiels entre l'anode et la cathode du photodétecteur et donc les conditions de polarisation du photodétecteur.

Dans les conditions normales de fonctionnement du dispositif, la photodiode est polarisée dans une gamme précise de potentiels. Cette gamme assure, par exemple, la polarisation en inverse du photodétecteur et/ou la conversion de la scène observée en un signal représentatif analysable. Si le potentiel de substrat SubPV est fixé cela impose une gamme accessible et/ou une gamme interdite pour la tension de référence V_{REF} provenant du module de lecture 2.

Le potentiel appliqué à la cathode est avantageusement très légèrement supérieur à celui appliqué à l'anode afin d'obtenir la polarisation en inverse du photodétecteur. De manière avantageuse, la différence de potentiel entre les bornes du photodétecteur est supérieure à un seuil qui assure un bon fonctionnement du dispositif. Le potentiel de photodétecteur SubPV est très légèrement inférieur au potentiel de référence V_{REF} dans les modes de réalisation illustrés aux figures 1 et 2.

Dans un mode de réalisation préférentiel, le transistor 4 est un transistor à effet de champ dont une électrode source/drain est connectée directement ou indirectement à la photodiode 1 et l'autre électrode source/drain est connectée directement ou indirectement au module de lecture 2.

Si le transistor 4 est à effet de champ, l'électrode de source/drain du transistor 4 est formée dans un matériau semi-conducteur dopé d'un type de conductivité opposé à celui de l'électrode associée du photodétecteur 1. Ainsi, dans les deux électrodes associées, il y en a une de type P et une de type N.

En d'autres termes, dans le cas où le transistor 4 est de type pMOS, ses électrodes de source et de drain sont dopées de type P. Le transistor pMOS est relié à l'électrode du photodétecteur qui est dopée de type N, c'est-à-dire la cathode. Dans un mode de réalisation particulier, la cathode du photodétecteur 1 est connectée directement au module de lecture 2 par l'intermédiaire d'un transistor pMOS.

Dans le cas où le transistor est de type nMOS, ses électrodes de source et de drain sont dopées de type N. Le transistor nMOS est relié à l'électrode du photodétecteur qui est dopée de type P, c'est-à-dire l'anode du photodétecteur 1. Dans un mode de réalisation particulier, l'anode du photodétecteur 1 est connectée directement au module de lecture par l'intermédiaire d'un transistor nMOS.

Lorsque le module de lecture 2 fonctionne normalement, il fournit sur sa borne d'entrée une tension de référence VREF prédéfinie qui sert à la polarisation du photodétecteur 1. La tension de référence VREF est appliquée au circuit d'anti-éblouissement 3 et donc au transistor 4. La tension de référence ou une tension représentative de cette dernière est appliquée au photodétecteur 1. La polarisation du photodétecteur 1 permet à ce dernier de délivrer un courant représentatif de l'illumination de la scène observée. Le courant est stocké et analysé par le module de lecture 2.

Pour avoir un bon fonctionnement du dispositif, le transistor 4 laisse passer le courant entre le photodétecteur 1 et le module de lecture 2. L'électrode de commande du transistor 4 est polarisée de manière à autoriser le passage du courant lorsque le module de lecture 2 est intègre et quand il polarise le photodétecteur dans la gamme choisie. Un potentiel de fonctionnement VPOL est appliqué sur la grille du transistor 4 pour définir un état passant et un état bloqué.

Il est intéressant d'utiliser la valeur attendue de la tension V_{REF} comme point de repère pour fixer l'état bloqué ou passant du transistor 4. La valeur du potentiel de fonctionnement V_{POL} imposé sur l'électrode de commande du transistor 4 est fixée par rapport aux potentiels appliqués sur les autres électrodes et principalement par rapport au potentiel de référence V_{REF} fourni en entrée du module de lecture 2.

Le potentiel de fonctionnement V_{POL} est défini par rapport à la tension de référence V_{REF} ou une tension proche de V_{REF} pour avoir un transistor 4 passant lorsque le module de lecture 2 délivre une tension suffisante pour assurer la polarisation recherchée du photodétecteur 1. A titre d'exemple des modes de réalisation des figures 1 et 2, si la tension de référence V_{REF} est la tension minimale qui assure la polarisation recherchée du photodétecteur 1, le potentiel de fonctionnement V_{POL} est défini par rapport à la tension de référence V_{REF} pour avoir un transistor 4 passant lorsque le module de lecture 2 délivre au moins la tension V_{REF}. Le transistor 4 est alors bloqué si la tension délivrée en sortie du module de lecture 2 est inférieure à la tension V_{REF}.

En d'autres termes, le potentiel de fonctionnement V_{POL} est défini de manière à avoir un transistor 4 passant si la différence de potentiel aux bornes du photodétecteur est suffisante pour obtenir la polarisation désirée.

Dans le cas d'une photodiode N/P associée à un transistor de type pMOS, la tension SubPV est inférieure à la tension de fonctionnement V_{POL} qui est elle-même inférieure à la tension de référence V_{REF}.

Le transistor 4 fonctionne en commutateur fermé lorsque le photodétecteur 1 est polarisé dans la gamme recherchée, ici polarisé en inverse. Le transistor à effet de champ est passant lorsque la valeur absolue de la tension V_{GS} entre la grille et la source est supérieure à la valeur absolue de la tension de seuil du transistor pMOS (|V_{GS} |>|Vₜₕ|). Le potentiel de fonctionnement V_{POL} est donc inférieur à la somme de la tension de référence V_{REF} et de la tension de seuil (V_{POL} < V_{REF}+Vₜₕ).

Dans un montage avec un transistor nMOS et une photodiode P/N, la répartition des potentiels est inversée. La tension de fonctionnement V_{POL} est supérieure d'une tension de seuil à la tension de référence (V_{POL} > V_{REF}+Vₜₕ).

Dans le cas où le circuit de détection est défaillant suite à un problème technologique de fabrication ou suite à une décharge électrostatique, la tension appliquée au photodétecteur 1 par l'intermédiaire du module de lecture 2, n'est plus dans une gamme autorisée. Afin d'éviter que le photodétecteur 1 ne soit polarisé hors de la gamme recherchée, par exemple polarisé en direct et qu'un courant parasite ne soit injecté dans le substrat comportant le photodétecteur, le module d'anti-éblouissement 3 empêche tout passage de courant.

Si un problème technologique intervient durant la réalisation du module de lecture 2, ce dernier n'est plus en mesure de fournir une tension de référence V_{REF} suffisante. La différence de potentiel entre l'entrée du module de lecture 2 et le potentiel SubPV n'est plus suffisante pour assurer une polarisation du photodétecteur dans la gamme recherchée, par exemple assurer la polarisation en inverse du photodétecteur 1. La polarisation en directe du photodétecteur va provoquer le passage d'un courant dans le substrat contenant le photodétecteur.

Comme la différence de potentiel entre l'électrode de commande et l'entrée du module de lecture 2 n'est plus suffisante en valeur absolue pour avoir un transistor passant, le transistor 4 devient bloqué ce qui empêche la circulation d'un courant vers le photodétecteur. Le transistor 4 agit comme un commutateur ouvert.

Ainsi, le transistor 4 est agencé pour fonctionner en commutateur fermé lorsque le module de lecture 2 assure la polarisation du photodétecteur dans une gamme prédéfinie de potentiels et en commutateur ouvert lorsque le module de lecture fournit un potentiel qui entraînerait une polarisation en directe de la photodiode ou un potentiel insuffisant pour travailler dans de bonnes conditions. Ce deuxième cas de figure correspond par exemple, à une défaillance du module de lecture ou une accumulation trop importante de charges dans le condensateur d'intégration ce qui se traduit par une évolution de la tension en entrée du module 2. Le transistor 4 évite que l'évolution de la tension en entrée du module 2 soit suffisante pour sortir le photodétecteur 1 de sa gamme de potentiel autorisée.

La polarisation appliquée sur l'électrode de commande du transistor 4 est configurée de manière à former un commutateur fermé lorsque la différence de potentiel aux bornes du photodétecteur est dans la gamme choisie. Il y a alors passage d'un courant entre le photodétecteur et le module de lecture 2 à travers le transistor 4. Le sens du courant varie selon la configuration du circuit. La polarisation appliquée sur l'électrode de commande du transistor 4 est également configurée de manière à former un commutateur ouvert lorsque la différence de potentiel aux bornes du photodétecteur est en dehors de la gamme choisie. Cette configuration empêche le passage d'un courant dans le sens opposé au cas précédent et/ou la fourniture d'un courant qui n'est pas représentatif de la scène observée.

Si le transistor 4 est un transistor de type pMOS, la tension de polarisation V_{POL} appliquée sur l'électrode de grille du transistor 4 est inférieure à la tension de référence d'une valeur égale au moins à la tension de seuil dans les conditions normales d'utilisation. Dans le cas d'un transistor nMOS, la tension de polarisation est supérieure d'une tension de seuil par rapport à V_{REF}. Le transistor 4 devient bloquant dès que l'entrée du module de lecture 2 n'est plus égale à la tension de référence V_{REF}. Dans une variante de réalisation, une tension différente de la tension V_{REF} peut être choisie.

La tension appliquée sur l'électrode de commande est choisie de manière à assurer uniquement l'obtention d'une polarisation inverse aux bornes du photodétecteur 1. En d'autres termes, le potentiel appliqué sur l'électrode de commande du transistor 4 permet le passage d'un courant entre le photodétecteur 1 et le module de lecture 2 lorsque le photodétecteur 1 est polarisé en inverse et bloque le passage du courant dans les autres cas. Le potentiel du photodétecteur SubPV est fixé par rapport au potentiel de référence V_{REF} de manière à avoir un photodétecteur délivrant un signal en courant représentatif de l'éclairement de la scène observée.

Dans un mode de réalisation préférentiel, le substrat ou le caisson du transistor 4 est polarisé à un potentiel supérieur à celui de l'électrode de source dans le cas d'un transistor pMOS ou inférieur à celui de l'électrode de source dans le cas d'un transistor nMOS au moyen d'une prise de substrat. Dans ce mode de réalisation, si un courant de porteurs existe, ce dernier sera dirigé par l'intermédiaire de la prise de substrat vers la source de potentiel qui polarise le substrat ou le caisson.

Dans une variante de réalisation, une pluralité de circuits de détection sont réalisés afin de former une matrice de détection. Les photodétecteurs 1 sont formés sur un même substrat. Selon les modes de réalisation, les anodes ou les cathodes des photodétecteurs 1 sont toutes reliées à un même nœud de potentiel, par exemple le potentiel de photodétecteur SubPV.

Chaque photodétecteur 1 est relié à un module de lecture 2 par l'intermédiaire d'un transistor 4 spécifique du module d'anti-éblouissement 3 associé. Chaque photodétecteur 1 est polarisé entre le potentiel défini par le module de lecture 2 et le potentiel SubPV. Chaque module d'anti-éblouissement 3 est associé à un potentiel de fonctionnement V_{POL}.

De manière avantageuse, pour avoir un dispositif compact, le même potentiel de référence est appliqué par tous les modules de lecture 2 ainsi que le même potentiel de fonctionnement V_{POL}. Les conditions de polarisation sont donc normalement identiques pour tous les photodétecteurs 1 et tous les transistors 4. Le potentiel de fonctionnement V_{POL} est défini selon les critères exprimés plus haut.

Dans ce mode de réalisation, si un module de lecture 2 est défaillant, aucun courant ne circule entre le module de lecture 2 et le photodétecteur 1. Ainsi, il n'y a pas introduction d'un courant parasite dans le substrat et les photodétecteurs 1 avoisinant ne délivrent pas plus de courant que normalement, c'est-à-dire qu'ils ne sont pas éblouis. Il y a donc simplement au moyen d'un transistor supplémentaire, la possibilité d'exclure le pixel défaillant.

Dans un mode de réalisation privilégié qui peut être combiné aux modes précédents, pour éviter que le transistor 4 ne perturbe le fonctionnement du circuit de détection, il est avantageux de faire fonctionner le transistor 4 dans son régime linéaire et d'éviter le régime de saturation. De cette manière, le courant délivré par le photodétecteur 1 est intégralement retransmis par le transistor 4 sans production d'artefacts à l'entrée du circuit de lecture.

Afin de favoriser le fonctionnement du transistor 4 dans un régime linéaire, il est avantageux de réaliser un transistor 4 ayant une largeur de grille importante. Dans ces conditions, il est également avantageux de réaliser une grille de faible longueur afin de conserver un dispositif occupant une surface réduite. De ce fait, il est avantageux de former un transistor 4 présentant un rapport largeur/ longueur de grille très élevé.

Dans un mode de réalisation particulier qui peut être combiné aux modes précédents, le transistor 4 est asymétrique. Le contact électrique de l'électrode qui est associée au photodétecteur est plus éloigné de l'électrode de grille que le contact électrique de l'autre électrode. L'électrode du transistor qui est connectée au photodétecteur est plus étendue que l'électrode qui est connectée au module de lecture 2. Une électrode est plus étendue lorsque ses plots de contact sont plus éloignés de la grille que les plots de contact de l'autre électrode. L'utilisation d'un transistor avec une électrode de drain étendue du côté de la photodiode permet de créer une résistance au niveau de l'électrode de drain considérée. Cette résistance supplémentaire de l'électrode de drain permet d'empêcher le courant de passer par le canal et d'aboutir à un claquage de l'oxyde de grille dans le module de lecture. Cette architecture favorise le passage du courant par la diode de jonction de type P/N qui est présente dans le transistor.

De manière avantageuse, la prise substrat du transistor est formée à proximité immédiate de l'électrode de drain pour un transistor pMOS ou nMOS. De cette manière, la diode entre le substrat et l'électrode de drain est favorisée. La prise substrat est avantageusement polarisée à un potentiel supérieur au potentiel de référence VREF pour un transistor pMOS. De manière avantageuse, la prise substrat est soumise au potentiel Vdda du circuit. Dans le cas d'un transistor nMOS et d'une diode de type opposée, la répartition des potentiels est inversée.

Le potentiel de fonctionnement V_{POL} est appliqué sur l'électrode de grille du transistor 4. Ce potentiel de fonctionnement V_{POL} permet le passage du courant entre le photodétecteur 1 et le module de lecture 2. De manière avantageuse, le potentiel de fonctionnement V_{POL} permet de faire travailler le transistor 4 dans son régime linéaire.

Dans le cas où le module de lecture 2 est formé par un amplificateur transimpédance capacitif (figure 1), il comporte un amplificateur 5 avec une première entrée reliée au transistor 4, une seconde entrée sur laquelle le potentiel de référence V_{REF} est appliquée. Un condensateur d'intégration 6 est connecté en contre-réaction entre une sortie et la première entrée de l'amplificateur 5.

Dans le cas où le module de lecture 2 est formé par un module d'injection direct contre-réactionné (figure 2). Une entrée d'un amplificateur 5 est connectée au transistor 4 et la sortie est connectée à l'électrode de grille d'un transistor de lecture 7. Une électrode de source/drain du transistor de lecture 7 est connectée au nœud commun entre le transistor 4 et l'amplificateur 5. L'autre électrode de source/drain est connectée vers la sortie du module de lecture.

Bien que le fonctionnement du transistor 4 soit décrit avec un transistor à effet de champ, il est également envisageable d'utiliser un transistor bipolaire. Il est néanmoins plus intéressant d'utiliser un transistor à effet de champ, car ce dernier est plus compact et présente une consommation plus faible.

## Revendications

1. Circuit de détection comportant :
- une photodiode (1) ayant une première borne recevant un potentiel de photodétecteur (SubPV) et une seconde borne,
- un module de lecture (2) configuré pour appliquer une tension de référence (V_{REF}) sur sa borne d'entrée et pour convertir une scène observée en un signal représentatif analysable, circuit de détection **caractérisé en ce qu'**il comporte :
- un transistor (4) agencé pour relier la seconde borne de la photodiode (1) à la borne d'entrée du module de lecture (2), la photodiode (1) étant polarisée en inverse dans une gamme prédéfinie entre sa première borne et sa second borne au moyen du potentiel de photodétecteur (SubPV) et de la tension de référence (V_{REF}) lorsque le transistor (4) est passant, la photodiode (1) délivrant un courant représentatif d'une scène observée,
- une source de tension appliquant un potentiel de fonctionnement (VPOL) sur une électrode de commande du transistor (4), le potentiel de fonctionnement (V_{POL}) étant défini par rapport à la tension de référence (V_{REF}) de sorte que lorsque le module de lecture (2) applique une tension seuil sur sa borne d'entrée s'écartant de la tension de référence (V_{REF}) et n'assurant plus la polarisation inverse de la photodiode (1) dans la gamme prédéfinie et tendant vers une polarisation en directe de la photodiode (1), le transistor (4) devient bloquant, le transistor (4) étant passant dans les autres cas.

2. Circuit de détection selon la revendication 1 **caractérisé en ce que** le module de lecture (2) est un amplificateur transimpédance capacitif.

3. Circuit de détection selon la revendication 1 **caractérisé en ce que** le module de lecture (2) est un module à injection direct contre-réactionné.

4. Circuit de détection selon l'une quelconque des revendications 1 à 3, **caractérisé en ce que** le transistor (4) est de type PMOS et connecté à la cathode du photodétecteur (1).

5. Circuit de détection selon l'une quelconque des revendications 1 à 4, **caractérisé en ce que** le transistor (4) est asymétrique, les contacts de l'électrode associée au photodétecteur (1) étant plus éloignés de l'électrode de grille que les contacts de l'autre électrode.

6. Matrice de détection comportant une pluralité de circuits de détection selon l'une quelconque des revendications 1 à 5, **caractérisé en ce que** les photodétecteurs (1) sont formés sur un même substrat et **en ce qu'**un même potentiel de fonctionnement (V_{G}) est appliqué sur les électrodes de commande des transistors (4).

## Patentansprüche

1. Detektionsschaltung, umfassend:
- eine Fotodiode (1) mit einer ersten Klemme, die ein Potential eines Fotodetektors (SubPV) empfängt, und einer zweiten Klemme,
- ein Lesemodul (2), das eingerichtet ist, um eine Referenzspannung (V_{REF}) an seine Eingangsklemme anzulegen, um eine beobachtete Szene in ein analysierbares repräsentatives Signal zu konvertieren,
wobei die Detektionsschaltung **dadurch gekennzeichnet ist, dass** sie umfasst:
- einen Transistor (4), der dazu vorgesehen ist, die zweite Klemme der Fotodiode (1) mit der Eingangsklemme des Lesemoduls (2) zu verbinden, wobei die Fotodiode (1) in einem vordefinierten Bereich zwischen ihrer ersten Klemme und ihrer zweiten Klemme mit Hilfe des Potentials des Fotodetektors (SubPV) und der Referenzspannung (V_{REF}) invers vorgespannt ist, wenn der Transistor (4) leitend ist, wobei die Fotodiode (1) einen für eine beobachtete Szene repräsentativen Strom liefert,
- eine Spannungsquelle, die ein Betriebspotential (V_{POL}) an eine Steuerelektrode des Transistors (4) anlegt, wobei das Betriebspotential (V_{POL}) in Bezug zur Referenzspannung (V_{REF}) derart definiert ist, dass, wenn das Lesemodul (2) eine Grenzspannung an seine Eingangsklemme anlegt, die sich von der Referenzspannung (V_{REF}) entfernt und nicht mehr die inverse Vorspannung der Fotodiode (1) in dem vordefinierten Bereich gewährleistet und zu einer direkten Vorspannung der Fotodiode (1) neigt, der Transistor (4) sperrt, wobei der Transistor (4) in den anderen Fällen leitend ist.

2. Detektionsschaltung nach Anspruch 1, **dadurch gekennzeichnet, dass** das Lesemodul (2) ein kapazitiver Transimpedanz-Verstärker ist.

3. Detektionsschaltung nach Anspruch 1, **dadurch gekennzeichnet, dass** das Lesemodul (2) ein Modul mit Gegenreaktions-Direkteinspeisung ist.

4. Detektionsschaltung nach einem der Ansprüche 1 bis 3, **dadurch gekennzeichnet, dass** der Transistor (4) vom Typ PMOA ist und an die Kathode des Fotodetektors (1) angeschlossen ist.

5. Detektionsschaltung nach einem der Ansprüche 1 bis 4, **dadurch gekennzeichnet, dass** der Transistor (4) asymmetrisch ist, wobei die Kontakte der dem Fotodetektor (1) zugeordneten Elektrode von der Gate-Elektrode weiter entfernt sind als die Kontakte der anderen Elektrode.

6. Detektionsmatrix, umfassend eine Vielzahl von Detektionsschaltungen nach einem der Ansprüche 1 bis 5, **dadurch gekennzeichnet, dass** die Fotodetektoren (1) auf einem selben Substrat ausgebildet sind, und dass ein selbes Betriebspotential (V_{G}) an die Steuerelektroden der Transistoren (4) angelegt wird.

## Claims

1. Detection circuit comprising:
- a photodiode (1) having a first terminal receiving a photodetector potential (SubPV) and a second terminal,
- a readout module (2) configured to apply a reference voltage (VREF) on its input terminal and to convert an observed scene into an analysable representative signal,
detection circuit **characterized in that** it comprises :
- a transistor (4) arranged to connect the second terminal of the photodiode (1) to the input terminal of the readout module (2), the photodiode (1) being reverse biased in a predefined range between its first terminal and its second terminal by means of the photodetector potential (SubPV) and the reference voltage (V_{REF}) when the transistor (4) is passing, the photodiode (1) delivering a current representative of an observed scene,
- a voltage source applying an operating potential (V_{POL}) to a control electrode of the transistor (4), the operating potential (V_{POL}) being defined with respect to the reference voltage (V_{REF}) in such a way that when the readout module (2) applies a threshold voltage to its input terminal deviating from the reference voltage (V_{REF}) and no longer ensuring the reverse biasing of the photodiode (1) in the predefined range and tending towards forward biasing of the photodiode (1), the transistor (4) is turned off, the transistor (4) being turned on in the other cases.

2. The detection circuit according to claim 1, **characterized in that** the readout module (2) is a capacitive transimpedance amplifier.

3. The detection circuit according to claim 1, **characterized in that** the readout module (2) is a buffered direct injection module.

4. The detection circuit according to any one of claims 1 to 3, **characterized in that** the transistor (4) is of PMOS type and is connected to the cathode of the photo-detector (1).

5. The detection circuit according to any one of claims 1 to 4, **characterized in that** the transistor (4) is asymmetric, the contacts of the electrode associated with the photodetector (1) being located farther from the gate electrode than the contacts of the other electrode.

6. A detection matrix comprising a plurality of detection circuits according to any one of claims 1 to 5, **characterized in that** the photodetectors (1) are formed on one and the same substrate and that one and the same operating potential (V_{G}) is applied to the control electrodes of the transistors (4).
